(19) Europäisches Patentamt
European Patent Office
Office européen des brevets

(11) **EP 3 463 811 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(21) Anmeldenummer: **17733741.7**

(22) Anmeldetag: **01.06.2017**

(51) Int Cl.:
**B29C 64/153** (2017.01)   **B29C 64/393** (2017.01)
**B29C 64/268** (2017.01)   **B22F 3/105** (2006.01)
**B33Y 50/02** (2015.01)

(86) Internationale Anmeldenummer:
**PCT/EP2017/063360**

(87) Internationale Veröffentlichungsnummer:
**WO 2017/207711 (07.12.2017 Gazette 2017/49)**

(54) **VERFAHREN UND VORRICHTUNG ZUR GENERATIVEN FERTIGUNG VON BAUTEILEN**

METHOD AND DEVICE FOR THE ADDITIVE MANUFACTURE OF COMPONENTS

PROCÉDÉ ET DISPOSITIF DE FABRICATION ADDITIVE DE PIÈCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.06.2016 DE 102016110266**

(43) Veröffentlichungstag der Anmeldung:
**10.04.2019 Patentblatt 2019/15**

(73) Patentinhaber: **Fraunhofer-Gesellschaft zur Förderung der angewandten Forschung e.V.
80686 München (DE)**

(72) Erfinder:
• **NOLL, Reinhard**
  **52076 Aachen (DE)**
• **KÄMMERLING, Jann**
  **52072 Aachen (DE)**

(56) Entgegenhaltungen:
**EP-A1- 1 815 936        WO-A1-2015/112726
WO-A1-2015/120047        WO-A1-2016/183210**

**Beschreibung**

Die Anmeldung betrifft ein Verfahren zur generativen Fertigung von Bauteilen durch lokale Verfestigung einer Schicht eines Aufbaumaterials auf einer aktuellen Bearbeitungsfläche eines sich im Fertigungsprozess befindlichen Bauteils mittels einer Bearbeitung mit Strahlung, bei dem ein Bearbeitungsstrahl mittels einer Bearbeitungsoptik auf eine Bearbeitungszone in der Schicht des Aufbaumaterials fokussiert wird, mittels einer Bewegungseinrichtung eine Relativbewegung zwischen aus der Bearbeitungsoptik austretender Strahlung und der aktuellen Bearbeitungsfläche des Bauteils ausgeführt wird, so dass die Bearbeitungszone entlang einer vorbestimmten Trajektorie über die aktuelle Bearbeitungsfläche des Bauteils geführt wird, und ferner mindestens ein zur Prozessüberwachung dienender Eingangs-Strahl in die Bearbeitungsoptik eingekoppelt wird, und von der Schicht des Aufbaumaterials ausgehende Ausgangs-Strahlung unter Nutzung der Bearbeitungsoptik vor Hinzufügen einer nächsten Schicht des Aufbaumaterials einer Detektions- und Auswerteeinrichtung zugeführt und von dieser erfasst und ausgewertet wird. Die Erfindung betrifft ferner eine Vorrichtung zur generativen Fertigung von Bauteilen, mit der das Verfahren genutzt werden kann.

Generative Fertigungsverfahren, auch additive Fertigungsverfahren genannt, erlauben die Herstellung dreidimensionaler Körper aus verschiedenen Werkstoffen, beispielsweise metallischen, oxidischen und organischen Werkstoffen, ausgehend von einem CAD-Datensatz. Einige bekannte Verfahren nutzen chemische Reaktionen zur schichtweisen Verfestigung dreidimensionaler Bauteile. Bei dem Verfahren der Stereolithographie werden die einzelnen Schichten des Bauteils durch ortsselektives Aushärten eines photosensitiven Aufbaumaterials mittels Laserstrahlung erzeugt. Andere bekannte Verfahren nutzen die physikalischen Prozesse des Schmelzens und Erstarrens zur Erzeugung der dreidimensionalen Bauteile. Von besonderem Interesse sind hier die Lasersinter- und Laserschmelzverfahren, zu denen das selektive Laserschmelzen (selective laser melting) und das Laserauftragschweißen gehören. Beim pulverbettbasierten Laserschmelzverfahren wird beispielsweise lagenweise in einem Pulverbett durch Führen eines Laserstrahls über das Pulverbett eine Folge von Spuren geschmolzenen Materials geschrieben. So wird Lage für Lage ein dreidimensionaler Festkörper aufgebaut, dessen Geometrie in weiten Bereichen frei gestaltbar ist. Damit bietet sich eine hohe Konstruktionsflexibilität, die mit herkömmlichen ur- und umformenden Verfahren oder spanenden Fertigungsverfahren nicht erreichbar ist und die keine speziellen Fertigungswerkzeuge erfordert.

Die Qualität des erzeugten Bauteils im Hinblick auf Materialeigenschaften, wie Risse, Porosität, Lunker, Bindefehler, Zugfestigkeit, Streckgrenze oder Inhomogenität, sowie im Hinblick auf Bauteilverzug, dimensionelle Richtigkeit, Oberflächenrauheit etc. hängt von einer Reihe von Prozessparametern ab, wie beispielsweise der Laserstrahlleistung, der Strahlqualität des Laserstrahls, der Strahlführung und Fokussierung, der Höhe der einzelnen Lagen, dem Spurabstand, der Geschwindigkeit der Laserstrahlbewegung bzw. der Scangeschwindigkeit, der Scanstrategie, den Umgebungsgasbedingungen sowie den Eigenschaften des Ausgangsmaterials, wie beispielsweise Topologie, chemischer Zusammensetzung und im Falle eines pulverförmigen Ausgangsmaterials der Korngrößenverteilung, dem Gefüge, den Oberflächeneigenschaften und dem Fließverhalten.

Die Bearbeitungsdauer für die Erzeugung eines dreidimensionalen Bauteils mit generativen Fertigungsverfahren kann bis zu mehreren Stunden betragen. Um den Erzeugungsprozess kontrolliert zu führen und nicht erst a posteriori das Ergebnis zu beurteilen, ist eine Inline-Prozesskontrolle erforderlich, mit der während der Bearbeitungsphase, also inline, physikalische und chemische Informationen aus der Umgebung der Wechselwirkungszone der bearbeitenden Strahlung gewonnen werden, die für eine korrigierende Prozessführung nutzbar sind. Im Allgemeinen sind diese Informationen im Bearbeitungsvolumen ortsabhängig.

Koaxiale Anordnungen einer Prozesssensorik für die Inline-Erfassung prozessrelevanter Größen sind in der Fachliteratur beschrieben. P. Lott et al. berichten in "Design of an Optical system for the In Situ Process Monitoring of Selective Laser Melting (SLM)", Phys. Procedia 12 (2011) 683-690, über die Integration eines Überwachungs- und Steuermoduls in eine SLM-Vorrichtung. Die SLM-Vorrichtung umfasst einen Scanner, der einen Bearbeitungsstrahl in Abhängigkeit von aus einem CAD-Modell gewonnener geometrischer Information ablenkt, und ein f-Theta-Objektiv zur Fokussierung des Bearbeitungsstrahls auf eine Bearbeitungsebene. Ferner umfasst sie einen dichroitischen Spiegel, der den Bearbeitungsstrahl zu dem Scanner hin ablenkt. Ein weiterer Laserstrahl, der zur Beleuchtung eines Bearbeitungsbereichs dient, wird mittels eines Strahlteilers abgelenkt und durch den dichroitischen Spiegel zu dem Scanner hin transmittiert und wie der Bearbeitungsstrahl positioniert und fokussiert. Die Bildinformation aus dem Bearbeitungsbereich durchläuft das gesamte System rückwärts und wird auf eine Hochgeschwindigkeitskamera fokussiert. Auf diese Weise kann die Dynamik eines vom Bearbeitungsstrahl erzeugten Schmelzbads orts- und zeitaufgelöst beobachtet werden. Allerdings ist die Größe und Lage des Beobachtungsfelds der koaxialen Prozesssensorik relativ zum Bearbeitungsbereich fixiert und zu diesem zentriert. Daher lassen sich damit keine Informationen über den aufgebauten Festkörper gewinnen. Eine Prüfung auf Fehler erfolgt üblicherweise erst im fertiggestellten Bauteil. Wird dann erst festgestellt, dass das Bauteil aufgrund eines Fehlers nicht brauchbar ist, sind Zeit und Material, die zur Herstellung dieses Bauteils verwendet wurden, vergeudet. Das Dokument EP 1 815 936 A1 offenbart ein Verfahren gemäß dem Oberbegriff des Anspruchs 1 und eine Vorrichtung gemäß dem Oberbegriff des Anspruchs 12.

Gesucht sind daher ein Verfahren und eine Vorrichtung, die die frei steuerbare ortsselektive Inline-Erfassung von Informationen aus der Umgebung der Wechselwirkungszone der Bearbeitungsstrahlung ermöglichen.

Diese Aufgabe wird erfindungsgemäß durch ein Verfahren gemäß Patentanspruch 1 sowie durch eine Vorrichtung mit den Merkmalen des Patentanspruchs 12 gelöst.

Vorteilhafte Ausgestaltungen der Erfindung sind in den abhängigen Patentansprüchen angegeben oder lassen sich aus der nachfolgenden Beschreibung entnehmen.

Gemäß der vorliegenden Erfindung wird in den Strahlengang des mindestens einen zur Prozessüberwachung dienenden Eingangs-Strahls eine ihm zugeordnete Ablenkeinheit gebracht. Durch das Zusammenwirken dieser Ablenkeinheit und der Bearbeitungsoptik lässt sich der Bereich, in dem der Eingangs-Strahl auf dem sich im Fertigungsprozess befindlichen Bauteil auftrifft und der im Folgenden Messzone genannt wird, unabhängig von dem in der vorliegenden Anmeldung Bearbeitungszone genannten Auftreffort des Bearbeitungsstrahls positionieren. Der Umkreis der Bearbeitungszone, in dem die Messzone frei positionierbar ist, ist nur dadurch begrenzt, dass der Eingangs-Strahl und der Bearbeitungsstrahl dieselbe Bearbeitungsoptik nutzen, und kann einen Radius von einigen Zentimetern aufweisen.

Bei dem erfindungsgemäßen Verfahren zur generativen Fertigung von Bauteilen wird eine Schicht eines Aufbaumaterials auf einer aktuellen Bearbeitungsfläche eines sich im Fertigungsprozess befindlichen Bauteils mittels einer Bearbeitung mit Strahlung lokal verfestigt. Nachdem die Verfestigung einer Schicht abgeschlossen ist, kann eine nächste Schicht des Aufbaumaterials auf der vorhergehenden Schicht, die nun die aktuelle Bearbeitungsfläche bildet, verfestigt werden. Dies wird solange wiederholt, bis das Bauteil fertig gestellt ist. Bei der Strahlung handelt es sich vorzugsweise um Laserstrahlung. Es sind aber auch Verfahren denkbar, bei denen Elektronenstrahlen zur Anwendung kommen.

Bei dem Aufbaumaterial kann es sich um einen pulverförmigen Werkstoff handeln. Bei pulverbettbasierten Verfahren, wie dem selektiven Laserschmelzen, wird jeweils eine ganze Lage dieses Werkstoffs auf eine Bauplattform bzw. auf der vorhergehenden Lage aufgebracht und jede Lage durch eine Bearbeitung mit Laserstrahlung ortsselektiv verfestigt. In diesem Fall ist die Bearbeitungsfläche eben. Je nach Größe des zu fertigenden Bauteils kann die aktuelle Bearbeitungsfläche die gesamte Lage oder Teilflächen davon umfassen. Alternativ dazu kann der pulverförmige Werkstoff, wie es beim Laserauftragschweißen der Fall ist, zusammen mit der Laserstrahlung ortsselektiv auf eine aktuelle Bearbeitungsfläche eines Bauteils aufgebracht werden. Die Bearbeitungsfläche muss dabei nicht eben sein, sondern kann auch eine dreidimensionale Gestalt haben. Bei dem Aufbaumaterial kann es sich aber auch um eine Flüssigkeit handeln, welche mittels ortsselektiver Bestrahlung durch eine chemische Reaktion von einer flüssigen in eine feste Phase überführt wird.

Durch die frei wählbare Positionierung der Messzone relativ zur Bearbeitungszone lässt sich nicht nur die Bearbeitungszone selbst und deren unmittelbare Umgebung, sondern auch ein bereits verfestigter Bereich des entstehenden Festkörpers beobachten. Dadurch kann während der Aufbauphase die aufgebaute Struktur hinsichtlich physikalischer und chemischer Eigenschaften berührungslos geprüft werden. Mit den auf diese Weise inline gewonnenen Informationen kann schon vor der endgültigen Fertigstellung des Bauteils in den Aufbauprozess korrigierend eingegriffen werden, um die erkannten Defekte und deren mögliche Auswirkungen zu reduzieren oder zu eliminieren. Dies kann beispielsweise noch während der Prozessphase der aktuellen Aufbaulage erfolgen oder nach Abschluss der betroffenen Lage und vor Beginn der nächsten Lage.

Da mit dem erfindungsgemäßen Verfahren etwaige Defekte zeitnah und nicht erst nach Fertigstellung des Bauteils entdeckt werden können, kann, bei Aufbauzeiten von mehreren Stunden, viel Zeit und auch Material eingespart werden. Selbst bei Defekten, die sich nicht mehr korrigieren lassen, bietet das Verfahren den Vorteil, dass der Aufbauprozess bei Entdeckung eines Fehlers abgebrochen werden kann.

Gemäß einer bevorzugten Ausgestaltung der Erfindung wird die dem mindestens einen Eingangs-Strahl zugeordnete Ablenkeinheit mittels einer Steuer- und Synchronisationseinrichtung mit der Bewegungseinrichtung synchronisiert. Dadurch kann sich die Messzone in einer definierten Beziehung zu der Bearbeitungszone über die aktuelle Bearbeitungsfläche des Bauteils bewegen. Insbesondere kann die Ablenkeinheit so gesteuert werden, dass die Messzone der Bearbeitungszone auf der vorbestimmten Trajektorie zur Bestimmung von Eigenschaften des verfestigten Aufbaumaterials nacheilt. Die Ablenkeinheit kann alternativ dazu oder eine weitere Ablenkeinheit kann so gesteuert werden, dass die Messzone sich zur Bestimmung von Eigenschaften der Bearbeitungszone und ihrer unmittelbaren Umgebung, insbesondere zur Bestimmung von Eigenschaften eines vom Bearbeitungsstrahl erzeugten Schmelzbads, koaxial zu der Bearbeitungszone bewegt. Weiterhin kann die Ablenkeinheit alternativ dazu oder eine weitere Ablenkeinheit so gesteuert werden, dass die Messzone der Bearbeitungszone auf der vorbestimmten Trajektorie vorauseilt, insbesondere zur Bestimmung von Eigenschaften des Aufbaumaterials vor der Bearbeitung. Schließlich kann die Ablenkeinheit so gesteuert werden, dass die Messzone entlang einer eigenen Trajektorie über die aktuelle Bearbeitungsfläche des Bauteils geführt wird. Auf diese Weise können mit einem Eingangs-Strahl nacheinander verschiedene Bereiche geprüft werden.

Gemäß einer weiteren bevorzugten Ausgestaltung der Erfindung handelt es sich bei dem mindestens einen Eingangs-Strahl um Laserstrahlung zur Messung chemischer Größen mittels Laser-Emissionsspektroskopie. Dadurch lassen sich Informationen über die chemische Zusammensetzung des Aufbaumaterials vor der Bearbeitung, des vom Bearbeitungsstrahl aufgeschmolzenen Aufbaumaterials, der umgeschmolzenen Spur, deren Zusammensetzung sich beispielsweise durch Abdampfungen von der ursprünglichen Zusammensetzung des Aufbaumaterials unterscheiden kann, von Oxidationsprodukten etc. gewinnen. Ferner handelt es sich bei dem mindestens einen Eingangs-Strahl um zeitlich moduliert Laserstrahlung zur Erzeugung von Ultraschallwellen, wobei ein weiterer Eingangs-Strahl zur laseroptischen Messung des Schallechos auf eine weitere Messzone fokussiert wird. So können inline Laser-Ultraschallmessungen durchgeführt werden, mit denen sich Defekte, wie beispielsweise Risse, Lunker und Bindefehler, der gerade verfestigten Schicht oder auch darunter liegender vorhergehender Schichten und Eigenschaften dieser Defekte, wie Lage, Form und Größe, zeitnah bestimmen lassen. Bei dem mindestens einen Eingangs-Strahl kann es sich auch um gepulste Laserstrahlung zur Durchführung von Laser-Pulsthermografie handeln.

Zusätzlich kann es sich bei dem mindestens einen Eingangs-Strahl um optische Strahlung zur Messung geometrischer Größen mittels absolut-messender Interferometrie handeln. Damit lassen sich inline prozess-relevante geometrische Größen, wie Abstände, Spurbreiten, Nahtzeichnung, Rauigkeiten des pulverförmigen Werkstoffs, Rauigkeiten der Oberfläche der Schmelzspur, und Partikelgrößen, Füllhöhen, Schüttdichten und Pulverüberdeckungen des pulverförmigen Werkstoffs, sowie Höhenprofile, Verzüge, Verformungen, Delaminationen, Risse und Poren des aufgebauten Festkörpers messen. Mit Pulverüberdeckungen soll die Dicke der Pulverschicht über den zuletzt aufgebauten Schichten des Festkörpers bezeichnet werden.

Vorzugsweise wird das Ergebnis der Auswertung der erfassten Ausgangs-Strahlung zur Inline-Steuerung und/oder Regelung des Fertigungsprozesses verwendet. Auf diese Weise lassen sich die Prozessparameter so einstellen, dass ein Festkörper mit den gewünschten Eigenschaften aufgebaut wird.

Gemäß einer weiteren bevorzugten Ausgestaltung der Erfindung wird in Abhängigkeit vom Ergebnis der Auswertung der erfassten Ausgangs-Strahlung vor Hinzufügen der nächsten Schicht des Aufbaumaterials mindestens ein Korrekturschritt ausgeführt, in dem entweder der Bearbeitungsstrahl ein zweites Mal oder ein zweiter Bearbeitungsstrahl über die aktuelle Bearbeitungsfläche des Bauteils geführt wird. Falls eine Korrektur nicht möglich ist oder nicht zum Erfolg führt, kann der Fertigungsprozess auch abgebrochen werden. Dadurch lässt sich unproduktive Zeit und Ausschuss an Material reduzieren. Die Anlagennutzung wird dadurch optimiert.

Die für die Durchführung des Verfahrens ausgebildete Vorrichtung umfasst eine Bearbeitungsoptik zum Fokussieren eines Bearbeitungsstrahls auf eine Bearbeitungszone in der Schicht des Aufbaumaterials, eine Bewegungseinrichtung zum Ausführen einer Relativbewegung zwischen aus der Bearbeitungsoptik austretender Strahlung und der aktuellen Bearbeitungsfläche des Bauteils, so dass die Bearbeitungszone einer vorbestimmten Trajektorie über die aktuelle Bearbeitungsfläche des Bauteils folgt, und ferner eine Einrichtung zum Einkoppeln des Bearbeitungsstrahls und mindestens eines zur Prozessüberwachung dienenden Eingangs-Strahls in die Bearbeitungsoptik und eine Detektions- und Auswerteeinrichtung zur Erfassung und Auswertung von von der Schicht des Aufbaumaterials ausgehender und unter Nutzung der Bearbeitungsoptik der Detektions- und Auswerteeinrichtung zugeführter Ausgangs-Strahlung vor Hinzufügen einer nächsten Schicht des Aufbaumaterials. Im Strahlengang eines jeden Eingangs-Strahls ist eine diesem Strahl zugeordnete Ablenkeinheit angeordnet, so dass der mindestens eine Eingangs-Strahl mittels der Bearbeitungsoptik auf eine Messzone fokussiert wird, die auf der aktuellen Bearbeitungsfläche des Bauteils in einem Umkreis der Bearbeitungszone relativ zur Bearbeitungszone frei positionierbar ist.

Gemäß einer bevorzugten Ausgestaltung der Erfindung handelt es sich bei der Bewegungseinrichtung um ein strahlablenkendes Element, vorzugsweise mit einer zweiachsigen Strahlablenkung, das einen Teil der Bearbeitungsoptik bildet. Vorzugsweise enthält die Bearbeitungsoptik außerdem mindestens ein strahlfokussierendes Element. Statt eines zweiachsigen strahlablenkenden Elements können auch zwei einachsige Elemente vorgesehen sein. Vorzugsweise handelt es sich bei dem strahlablenkenden Element um einen Galvanometer-Scanner. Es sind aber auch andere Scanner, wie beispielsweise Polygon-Scanner oder akusto-optische Ablenksysteme, denkbar. Alternativ dazu kann auch ein die Bearbeitungsoptik, die Einrichtung zum Einkoppeln der Strahlung in die Bearbeitungsoptik und die mindestens eine Ablenkeinheit umfassender Bearbeitungskopf bewegbar ausgebildet sein.

Bei der im Strahlengang eines jeden Eingangs-Strahls angeordneten Ablenkeinheit kann es sich auch um einen zweiachsigen Scanner handeln, vorzugsweise um einen Galvanometer-Scanner. Andere Scanner, beispielsweise Polygon-Scanner oder akusto-optische Ablenksysteme, sind aber auch denkbar.

Ferner gelten die im Zusammenhang mit dem erfindungsgemäßen Verfahren beschriebenen bevorzugten Ausführungsformen und Vorteile, soweit anwendbar, auch für die erfindungsgemäße Vorrichtung.

Weitere Vorteile, Merkmale und Einzelheiten der Erfindung ergeben sich aus der nachfolgenden Beschreibung, bevorzugter Ausführungsbeispiele sowie anhand der Zeichnungen.

Es zeigen:

Figur 1         eine schematische Schnittansicht von Elementen einer Vorrichtung zur generativen Fertigung von Bauteilen nicht gemäß der Erfindung;

Figur 2a) bis c)   eine schematische Darstellung einer beispielhaften Trajektorie und der zugehörigen Ablenkwinkel;

Figur 3a) bis d)   jeweils eine schematische Draufsicht auf eine Bearbeitungsfläche mit unterschiedlicher Anordnung der Messzone relativ zur Bearbeitungszone;

Figur 4   eine schematische Schnittansicht von Elementen einer Vorrichtung zur generativen Fertigung von Bauteilen gemäß der Erfindung;

Figur 5   eine schematische Draufsicht auf eine Bearbeitungsfläche für die Vorrichtung gemäß Figur 4; und

Figur 6   eine schematische Darstellung von Bahnpositionen der drei Wechselwirkungszonen für die Vorrichtung gemäß Figur 4 als Funktion der Zeit.

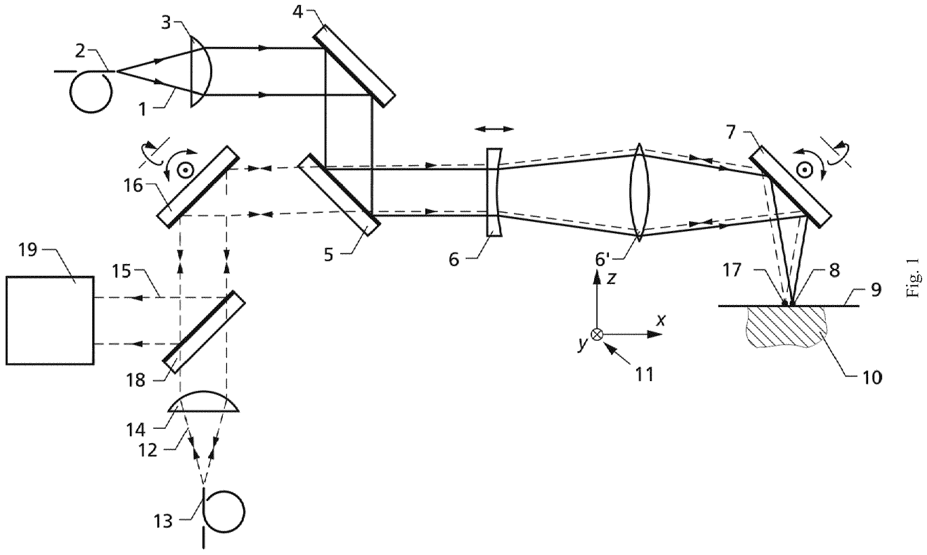

Figur 1 zeigt Elemente einer Vorrichtung gemäß der Offenbarung in Schnittansicht. Die Darstellung ist nicht maßstabsgetreu. Die Lage der Raumachsen x, y und z ist durch ein Koordinatensystem 11 angedeutet. Die Vorrichtung umfasst eine Bearbeitungsoptik mit Fokussierkomponenten 6 und 6' und einer zweiachsigen Ablenkeinheit 7. Ferner umfasst die Vorrichtung einen Lichtwellenleiter 2, eine Kollimationsoptik 3 und einen Umlenkspiegel 4 für eine Bearbeitungsstrahlung 1 sowie einen Lichtwellenleiter 13 eine Kollimationsoptik 14 und ein zweiachsiges Ablenksystem 16 für eine der Prozessüberwachung dienende Strahlung 12. Schließlich zeigt Figur 1 noch einen dichroitischen Spiegel 5 zum Einkoppeln der Bearbeitungsstrahlung 1 und der Strahlung 12 in die Bearbeitungsoptik und einen dichroitischen Spiegel 18 zum Umlenken einer durch die Strahlung 12 induzierten Strahlung 15 in einen Empfänger 19 zur Auswertung der Strahlung 15.

Anhand Figur 1 soll nun das erfindungsgemäße Verfahren gemäß dem ersten Ausführungsbeispiel der Erfindung erläutert werden. Eine erste optische Strahlung 1, die für den Bearbeitungsprozess eingesetzt werden soll und daher auch Bearbeitungsstrahlung genannt wird, wird beispielsweise über den Lichtwellenleiter 2 der Kollimationsoptik 3 zugeführt und gelangt über den Umlenkspiegel 4 und den dichroitischen Spiegel 5 sowie die Fokussierkomponenten 6 und 6' und die Ablenkeinheit 7 auf eine Oberfläche 9 eines Materials 10. Dieses Material liegt beispielsweise in Form von Partikeln in einem Pulverbett vor. Auf der Oberfläche 9 wird die Strahlung 1 auf eine erste Wechselwirkungszone 8, auch Bearbeitungszone genannt, fokussiert. Diese Bearbeitungszone 8 wird in der xy-Ebene durch das Zusammenwirken einer von den Fokussierkomponenten 6 und 6' bewirkten Axialverstellung und der durch die Ablenkeinheit 7 bewirkten Lateralablenkung in x- und y-Richtung über das Pulverbett verfahren, um eine Spur geschmolzenen Materials zu erzeugen. Für die erste optische Strahlung wird üblicherweise eine kontinuierliche Laserstrahlung mit einer Wellenlänge im Bereich von 1 |jm und mit einer Leistung im Bereich von einigen 10 W bis über 1 kW verwendet.

Eine zweite optische Strahlung 12, die der Prozessüberwachung dienen soll, wird über beispielsweise den Lichtwellenleiter 13 der Kollimationsoptik 14 zugeführt und über die zweiachsige Ablenkeinheit 16 und den dichroitischen Spiegel 5 mit der ersten Strahlung 1 überlagert. Der dichroitische Spiegel 5 ist so gewählt, dass er die erste Strahlung 1 reflektiert und die zweite Strahlung 12, die eine andere Wellenlänge hat, transmittiert. Die zweite Strahlung 12 verläuft dabei näherungsweise kollinear zur ersten Strahlung 1. Die Propagationsachse der Strahlung 12 ist durch die Ablenkung mittels der Ablenkeinheit 16 geringfügig gegenüber derjenigen der Strahlung 1 geneigt (siehe strichlierte Darstellung der Strahlwege in Figur 1). Dadurch entsteht auf der Oberfläche 9 eine zweite Wechselwirkungszone 17, auch Messzone genannt, die gegenüber der Bearbeitungszone 8 in der xy-Ebene versetzt ist.

Die zweite Strahlung 12 ist beispielsweise eine optische Strahlung mit der geometrische Größen am zweiten Wechselwirkungsort 17 mit dem Verfahren der absolut-messenden Interferometrie gemessen werden. Zu diesem Zweck wird üblicherweise kontinuierliche Laserstrahlung, deren Wellenlänge im Bereich von 193 nm bis 10 $\mu$m, insbesondere im Bereich von 600 nm bis 1,5 $\mu$m, liegen kann, und mit einer Leistung im Bereich von 0,1 mW bis 1 W verwendet. Die von der Oberfläche 9 reflektierte Strahlung 12 wird antiparallel wieder zurückgeführt (siehe Doppelpfeile an den strichlierten Strahlen in Figur 1) und gelangt schließlich wieder über den Lichtwellenleiter 13 zu einem separaten Messempfänger (in Figur 1 nicht dargestellt). Außerdem kann die zweite Strahlung 12 eine Laserstrahlung sein, mit der chemische Größen am zweiten Wechselwirkungsort 17 gemessen werden, beispielsweise mit dem Verfahren der Laser-Emissionsspektroskopie (Laser-induced Breakdown Spectroscopy, LIBS). Zu diesem Zweck ist die zweite Strahlung 12 gepulst, mit Pulsdauern zwischen 100 ps und 100 $\mu$s, bei Wellenlängen von 0,5 $\mu$m bis 10 $\mu$m und mittleren Leistungen von 0,5 W bis 50 W. Die von der Oberfläche 9 ausgesandte Strahlung 15 hat in diesem Fall eine Wellenlänge, die von derjenigen der anregenden Strahlung 12 abweicht. Sie kann nach Durchlaufen der Ablenkeinheit 16 mit dem dichroitischen Spiegel 18 in die Empfangseinrichtung 19 gelenkt und dort spektroskopisch ausgewertet werden. Der dichroitische Spiegel 18 ist so gewählt, dass er die Strahlung 12 transmittiert und die Strahlung 15 reflektiert. Schließlich kann die zweite Strahlung 12 eine gepulste Laserstrahlung zur Durchführung von Laser-Pulsthermografie sein. Von der Oberfläche 9 ausgesandte thermische Strahlung 15 kann ebenfalls in die Empfangseinrichtung 19 gelenkt und dort spektroskopisch analysiert werden, wobei insbesondere der dichroitische Spiegel 18 und die Empfangseinrichtung 19 in Abhängigkeit von der Wellenlänge der zu analysierenden Strahlung 15 zu wählen sind.

Zu jeder zeitlichen Folge der Ablenkwinkelpositionen der Ablenkeinheit 7, $\theta_x^p(t)$, $\theta_y^p(t)$ mit den maximalen Winkelpositionen $\theta_{x,\max}^p$, $\theta_{y,\max}^p$, die die Lage der ersten Wechselwirkungszone 8 der Bearbeitungsstrahlung 1 bestimmen, gehören Winkelpositionen $\theta_x^m(t)$, $\theta_y^m(t)$ mit den maximalen Winkelpositionen $\theta_{x,\max}^m$, $\theta_{y,\max}^m$, die aus dem Zusammenwirken der Ablenkungen durch die Ablenkeinheiten 16 und 7 entstehen, so dass für die zweite Strahlung 12 die zweite Wechselwirkungszone 17 in einem definierten Abstand $s_{12}$ erzeugt wird. Die allein durch die Ablenkeinheit 16 erzeugten Ablenkungen werden durch

$$\Delta\theta_x(t) = \theta_x^p(t) - \theta_x^m(t),$$

$$\Delta\theta_y(t) = \theta_y^p(t) - \theta_y^m(t)$$ beschrieben, wobei gilt:

$$\Delta\theta_x(t) \ll \theta_{x,\max}^p, \theta_{x,\max}^m,$$

$$\Delta\theta_y(t) \ll \theta_{y,\max}^p, \theta_{y,\max}^m.$$

Das heißt die zweiachsige Ablenkeinheit 16 führt nur Winkelbewegungen durch, die erheblich kleiner sind als diejenigen der zweiachsigen Ablenkeinheit 7.

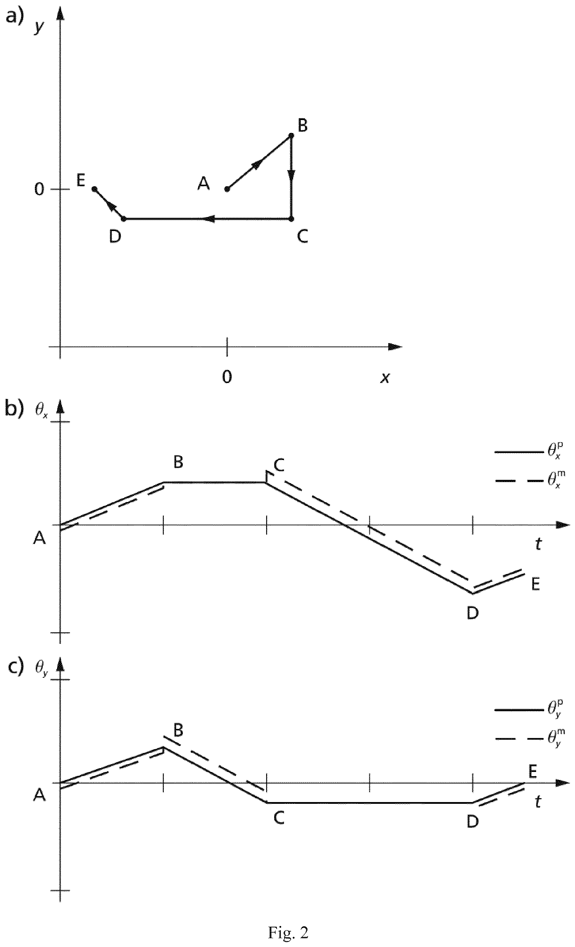

In Figur 2 wird beispielhaft die Trajektorie der ersten Wechselwirkungszone 8 sowie die zeitabhängigen Ablenkwinkel der Strahlablenkeinheiten 16 und 7 zur Erzeugung der zweiten Wechselwirkungszone 17 gezeigt. Mit dem erfindungsgemäßen Verfahren ist es möglich, die zweite Wechselwirkungszone 17 der ersten in definierter Weise, d.h. in einem definierten Abstand und in einer definierten Winkellage nachzuführen.

Figur 2 a) zeigt die Bahnkurve der Wechselwirkungszone 8 der ersten Strahlung 1 in der xy-Ebene. Diese beginnt im Punkt A und verläuft in verschiedenen Raumrichtungen über B, C, D bis E. Vereinfachend ist hier ein Polygonzug angenommen bei dem die einzelnen geraden Streckenabschnitte mit konstanter Geschwindigkeit durchlaufen werden. Im Allgemeinen sind alle Formen von gekrümmten, zusammenhängenden und nicht zusammenhängenden Trajektorien möglich, die mit zeitlich variierenden Geschwindigkeiten durchlaufen werden.

Die zugehörigen Ablenkwinkel $\theta_x^p(t)$, $\theta_y^p(t)$ und $\theta_x^m(t)$, $\theta_y^m(t)$ als Funktion der Zeit sind schematisch in Figur 2 b) und c) dargestellt, dabei steht die durchgezogene Linie für die Winkel $\theta^p$ der ersten Strahlung 1 und die strichlierte graue Linie für die Winkel $\theta^m$ der zweiten Strahlung 12. Je nach Bewegungsrichtung in der xy-Ebene sind für die erste und zweite Strahlung unterschiedliche Winkel zu wählen, um die Wechselwirkungszone 17 der Zone 8 in einem frei definierbaren Abstand $s_{12}$ nachzuführen. Zwischen B und C haben die Ablenkwinkel $\theta_x^p$ und $\theta_x^m$ den gleichen Wert. Zwischen C und D haben die Ablenkwinkel $\theta_y^p$ und $\theta_y^m$ den gleichen Wert.

Was in Figur 2 als Beispiel für einen Nachlauf der zweiten Wechselwirkungszone dargestellt ist, kann gleichermaßen auch für einen Vorlauf oder andere beliebige Raumorientierungen der zweiten Wechselwirkungszone zur ersten Wechselwirkungszone gestaltet werden.

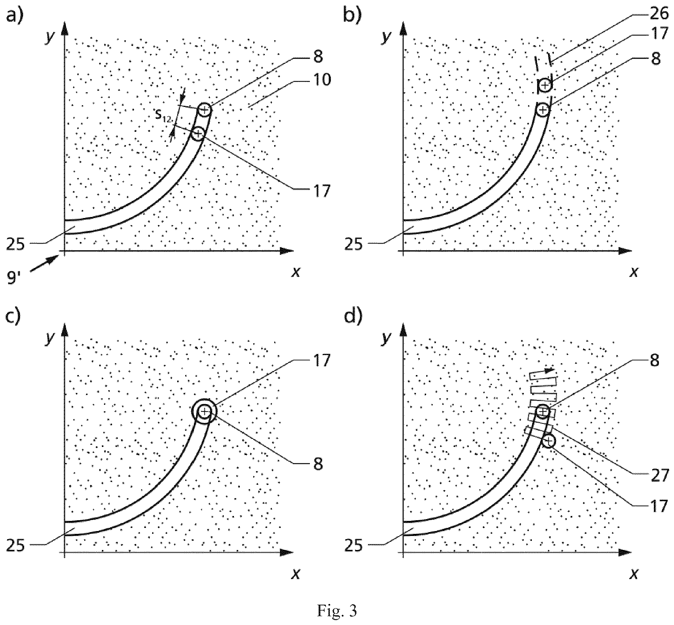

Figur 3 zeigt schematisch eine Draufsicht auf die xy-Ebene mit verschiedenen Konstellationen der Messzone 17 relativ zur Bearbeitungszone 8.

Figur 3a) zeigt die Situation des Nachlaufs wie er auch anhand von Figur 2 beschrieben wurde. Die Bearbeitungszone 8 wird durch die Ablenkeinheit 7 entlang einer Trajektorie 25 in der xy-Ebene über ein Material 10, das beispielsweise als Pulverbett vorliegt, geführt. Die Messzone 17 wird in einem frei einstellbaren Abstand $s_{12}$ nachgeführt, folgt also der ersteren in der bereits bearbeiteten Spur. Diese Verfahrensvariante eignet sich für folgende Aufgabenstellungen: Messung von Abständen, Profilen, Rauigkeiten, Nahtzeichnung, Rissen, Poren, Verzügen, Verformungen, Delaminationen der erzeugten Schmelzspur; Laser-Pulsthermografie und Messung der chemischen Zusammensetzung. Vereinfachend zeigt Figur 3a) eine Messzone 17 mit dem gleichen Durchmesser wie die Bearbeitungszone 8. Im Allgemeinen kann der Durchmesser unterschiedlich gewählt werden, so dass die Messzone 17 auch einen kleineren Durchmesser als die Bearbeitungszone 8 aufweisen kann oder umgekehrt. Dies kann in bekannter Weise durch entsprechende Positionierung der Kollimationsoptik 14 oder aber durch Hinzufügen weiterer Fokussierkomponenten, die zwischen der Kollimationsoptik 14 und der Ablenkeinheit 16 anzuordnen sind, erreicht werden.

In Figur 3b) ist die Situation eines Vorlaufs dargestellt, d.h. die Messzone 17 läuft entlang der für die Bearbeitungszone 8 vorgesehenen Trajektorie 26 (in Figur 3b) strichliert dargestellt) in einem definierten Abstand voraus. Diese Verfahrensvariante eignet sich für folgende Aufgabenstellungen: Messung von Partikelgrößen, Füllhöhen, Schüttdichten und Pulverüberdeckungen eines pulverförmigen Ausgangsmaterials und Messung der chemischen Zusammensetzung.

Figur 3c) zeigt den Fall, dass die beiden Wechselwirkungszonen zueinander koaxial angeordnet sind, wobei die Messzone 17 größer als die Bearbeitungszone 8 ist. Diese Verfahrensvariante eignet sich für folgende Aufgabenstellungen: Messung der Bewegung eines von der Bearbeitungsstrahlung erzeugten Schmelzbads, Messung des Oberflächenprofils des Schmelzbads, Messung der geometrischen Form des Schmelzbads, Messung der Einschweißtiefe, Messung des Schweiß-Key-Holes, Messung der Temperatur des Schmelzbads und Messung der chemischen Zusammensetzung.

Figur 3d) zeigt schließlich eine Führung des der Prozessüberwachung dienenden Strahls entlang eines Ablenkmusters 27, das Teile des Ausgangsmaterials, die Bearbeitungszone 8 sowie die erzeugte Spur 25 umfasst. Diese Verfahrensvariante vereinigt die bereits oben genannten Möglichkeiten für die Messung geometrischer, thermischer und chemischer Größen entlang der Bahn 27. Da die zeitabhängig gewählten Ablenkwinkel der Ablenkeinheit 16 synchronisiert zu den Ablenkwinkeln der Ablenkeinheit 7 geführt werden, ist jederzeit eine räumliche Zuordnung der Messzone 8 relativ zur momentanen Lage der Bearbeitungszone 17 möglich.

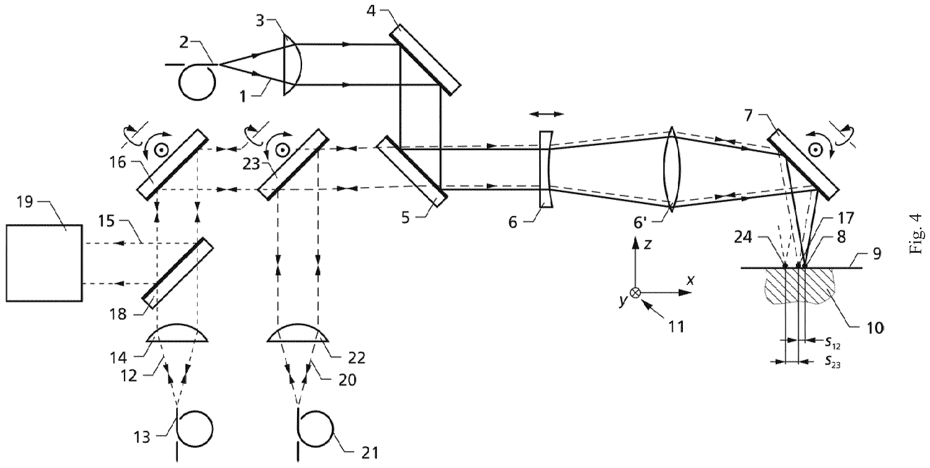

Figur 4 zeigt Elemente einer Vorrichtung gemäß der Erfindung in Schnittansicht. Die Darstellung ist nicht maßstabsgetreu. Einander entsprechende Merkmale sind mit denselben Bezugszeichen versehen wie in Figur 1. Zusätzlich zu den bereits im Zusammenhang mit Figur 1 beschriebenen Merkmalen weist die Vorrichtung gemäß Figur 4 einen Lichtwellenleiter 21, eine Kollimationsoptik 22 und eine zweiachsige Ablenkeinheit 23 auf, wobei die Ablenkeinheit 23 als dichroitischer Spiegel ausgebildet ist.

Im Folgenden sei die Funktionsweise der erfindungsgemäßen Vorrichtung gemäß dem zweiten Ausführungsbeispiel erläutert. Die Bearbeitungsstrahlung 1 nimmt den gleichen Weg wie bereits im Zusammenhang mit Figur 1 erläutert und wird auf der Oberfläche 9 auf die erste Wechselwirkungszone 8 fokussiert. Ebenso nimmt die zweite optische Strahlung 12 den gleichen Weg wie bereits im Zusammenhang mit Figur 1 erläutert, wobei sie zusätzlich die Ablenkeinheit 23 passiert, von der sie zum Großteil transmittiert wird, und wird auf der Oberfläche 9 auf die zweite Wechselwirkungszone 17 fokussiert. Neben den bereits im Zusammenhang mit Figur 1 beschriebenen Möglichkeiten kann die Strahlung 12 eine zeitlich modulierte Laserstrahlung sein, die dazu dient, in der zweiten Wechselwirkungszone 17 Ultraschallwellen zu erzeugen. Diese Ultraschallwellen werden dazu verwendet, mit dem sogenannten Laser-Ultraschallverfahren Risse, Lunker oder Bindefehler in der erzeugten Spur oder auch den darunter liegenden vorhergehenden Spuren zu detektieren. Der Abstand der zweiten Wechselwirkungszone 17 von der Wechselwirkungszone 8 wird mit $s_{12}$ bezeichnet.

Eine dritte optische Strahlung 20 wird beispielsweise über den Lichtwellenleiter 21 der Kollimationsoptik 22 zugeführt, die über die zweiachsige Ablenkeinheit 23 und den dichroitischen Spiegel 5 mit der ersten Strahlung 1 und der zweiten Strahlung 12 überlagert wird. Die dritte Strahlung 20 verläuft dabei näherungsweise kollinear zur ersten Strahlung 1. Die Propagationsachse der Strahlung 20 ist durch die Ablenkung mittels der Ablenkeinheit 23 geringfügig gegenüber derjenigen der Strahlung 1 geneigt, wobei der Weg der Strahlung 20 nach der Ablenkung durch die Ablenkeinheit 23 in Figur 4 der Übersichtlichkeit halber nicht dargestellt ist. Durch die Ablenkung entsteht auf der Oberfläche 9 eine dritte Wechselwirkungszone 24, auch weitere Messzone genannt, die gegenüber der zweiten Wechselwirkungszone 17 in der xy-Ebene um einen Abstand $s_{23}$ versetzt ist. Sofern die zweite Strahlung 12 dazu verwendet wird, in der zweiten Wechselwirkungszone 17 Ultraschallwellen anzuregen, ist die dritte optische Strahlung 20 erforderlich, um deren Schallecho in der dritten Wechselwirkungszone 24 laseroptisch zu messen. Die dritte Wechselwirkungszone 24 wird in analoger Weise zum in Figur 2 erläuterten Ablauf in einem definierten Abstand $s_{23}$ zu der zweiten Wechselwirkungszone 17 geführt.

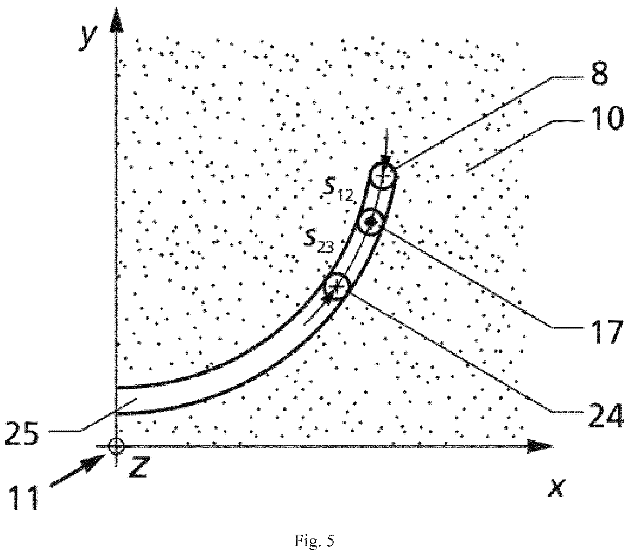

Figur 5 zeigt schematisch eine Draufsicht auf die xy-Ebene mit der Anordnung der Bearbeitungszone 8 und den beiden Messzonen 17 und 24. Die erste Messzone 17 wird in einem frei einstellbaren Abstand $s_{12}$ der Bearbeitungszone 8 nachgeführt, folgt also in der bereits bearbeiteten Spur. Dies eignet sich u.a. zur Messung von Lunkern und Bindefehlern mittels einer Anregung von Ultraschallwellen durch zeitlich modulierte Laserstrahlung.

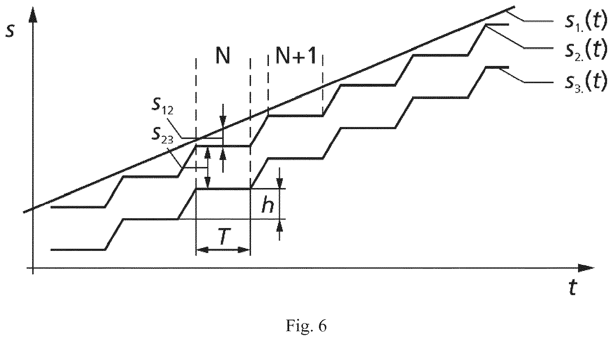

Das Verfahren sieht vor, dass die Abstände $s_{12}$ und $s_{23}$ so eingestellt werden, dass die lasergestützte Ultraschallanregung in der zweiten Wechselwirkungszone 17 und die laseroptische Messung des Schallechos in der dritten Wechselwirkungszone 24 für eine Haltezeit T an einem Ort fix bleiben, während die erste Wechselwirkungszone 8 weiterhin fortschreitet. Figur 6 zeigt schematisch den Ablauf in einem Diagramm mit den Positionen der Wechselwirkungszonen als Funktion der Zeit t in einer Koordinate s, die die Positionen der Wechselwirkungszonen längs einer zu schreibenden oder schon geschriebenen Spur des generativen Fertigungsprozesses angibt.

Die Größe $s_1(t)$ gibt die Position der ersten Wechselwirkungszone an, $s_2(t)$ die der zweiten und $s_3(t)$ die der dritten als Funktion der Zeit. Während der Haltezeit $T$ werden eine Reihe von Ultraschallanregungen in der zweiten Wechselwirkungszone 17 und Echomessungen in der dritten Wechselwirkungszone 24 durchgeführt, um Defekte im aufgebauten Material zu erkennen. Die Orte der Ultraschallanregung und der Messung des Echos können auch vertauscht werden.

Durch die Haltezeit T wird erreicht, dass die beiden beteiligten Wechselwirkungszonen relativ zur aufgebauten Spur fix sind, d.h. $s$ = const. in diesem Zeitintervall, und damit ihr gegenseitiger Abstand $s_{23}$ zeitlich konstant ist, so dass eine Messung unter reproduzierbaren Bedingungen durchführbar ist und diese nicht durch variierende Oberflächeneigenschaften der aufgebauten Festkörperspur beeinflusst wird. Der Zeitverlauf von $s_2(t)$ und $s_3(t)$ ist so gewählt, dass sich durchschallte Streckenabschnitte $s_{23}$ in aufeinanderfolgenden Halteintervallen N und N+1 aneinander anschließen oder abschnittsweise überlappen, so dass die Bedingung: $s_{23} \geq h$ erfüllt ist, wobei $h$ die Stufenhöhe beschreibt. In Figur 6 ist der Fall dargestellt, dass sich aufeinanderfolgende zu prüfende Streckenabschnitte teilweise überlappen. Auf diese Weise kann eine lückenlose Prüfung der aufgebauten Spur und der darunterliegenden vorhergehenden Spuren realisiert werden.

Bevorzugte Ausführungsbeispiele der Erfindung enthalten zumindest zwei kaskadierte frei steuerbare Strahlablenkeinheiten, von denen eine den bearbeitenden Laserstrahl als Funktion der Zeit entlang einer Trajektorie zur Erzeugung einer ersten Wechselwirkungszone führt und eine zweite Strahlablenkeinheit eine weitere elektromagnetische Strahlung in den Strahlengang der ersten Strahlung einkoppelt, so dass diese ebenfalls über die erste Strahlablenkeinheit geführt wird. Durch das Zusammenwirken beider Strahlablenkeinheiten entsteht eine frei positionierbare zweite Wechselwirkungszone. Vorzugsweise umfasst eine erfindungsgemäße Vorrichtung zumindest eine Steuer- und Synchronisationseinrichtung, die die Ablenkwinkel und Axialpositionen der mindestens zwei kaskadierten Strahlablenkeinheiten ansteuert und so synchronisiert, dass ein wählbarer Nachlauf, Vorlauf oder andere Konfiguration erzeugt werden können.

## Patentansprüche

1. Verfahren zur generativen Fertigung von Bauteilen durch lokale Verfestigung einer Schicht eines Aufbaumaterials auf einer aktuellen Bearbeitungsfläche eines sich im Fertigungsprozess befindlichen Bauteils mittels einer Bearbeitung mit Strahlung, bei dem ein Bearbeitungsstrahl (1) mittels einer Bearbeitungsoptik (6,6',7) auf eine Bearbeitungszone (8) in der Schicht des Aufbaumaterials fokussiert wird, mittels einer Bewegungseinrichtung (7) eine Relativbewegung zwischen aus der Bearbeitungsoptik austretender Strahlung und der aktuellen Bearbeitungsfläche des Bauteils ausgeführt wird, so dass die Bearbeitungszone entlang einer vorbestimmten Trajektorie über die aktuelle Bearbeitungsfläche des Bauteils geführt wird, und ferner mindestens ein zur Prozessüberwachung dienender Eingangs-Strahl (12,20) in die Bearbeitungsoptik eingekoppelt wird, und von der Schicht des Aufbaumaterials ausgehende Ausgangs-Strahlung unter Nutzung der Bearbeitungsoptik vor Hinzufügen einer nächsten Schicht des Aufbaumaterials einer Detektions- und Auswerteeinrichtung zugeführt und von dieser erfasst und ausgewertet wird, wobei es sich bei dem mindestens einen Eingangs-Strahl (12) um zeitlich modulierte Laserstrahlung zur Erzeugung von Ultraschallwellen handelt, und ein weiterer Eingangs-Strahl (20) zur laseroptischen Messung des Schallechos vorgesehen ist, **dadurch gekennzeichnet, dass** jeder Eingangs-Strahl (12,20) zusätzlich eine ihm zugeordnete Ablenkeinheit (16,23) passiert, so dass er mittels der Bearbeitungsoptik auf eine ihm zugeordnete Messzone (24) fokussiert wird, die auf der aktuellen Bearbeitungsfläche des Bauteils in einem Umkreis der Bearbeitungszone relativ zur Bearbeitungszone frei positionierbar ist..

2. Verfahren nach Anspruch 1,
**dadurch gekennzeichnet, dass**
die dem mindestens einen Eingangs-Strahl zugeordnete Ablenkeinheit mittels einer Steuer- und Synchronisationseinrichtung mit der Bewegungseinrichtung synchronisiert wird.

3. Verfahren nach Anspruch 2,
**dadurch gekennzeichnet, dass**
die Ablenkeinheit so gesteuert wird, dass die Messzone der Bearbeitungszone auf der vorbestimmten Trajektorie (25,26) zur Bestimmung von Eigenschaften des verfestigten Aufbaumaterials nacheilt.

4. Verfahren nach Anspruch 2 oder 3,
**dadurch gekennzeichnet, dass**
die Ablenkeinheit so gesteuert wird, dass die Messzone sich, insbesondere zur Bestimmung von Eigenschaften eines vom Bearbeitungsstrahl erzeugten Schmelzbads, koaxial zu der Bearbeitungszone bewegt.

5. Verfahren nach einem der Ansprüche 2 bis 4,
**dadurch gekennzeichnet, dass**
die Ablenkeinheit so gesteuert wird, dass die Messzone der Bearbeitungszone auf der vorbestimmten Trajektorie, insbesondere zur Bestimmung von Eigenschaften des Aufbaumaterials vor der Bearbeitung, vorauseilt.

6. Verfahren nach Anspruch 2,
**dadurch gekennzeichnet, dass**
die Ablenkeinheit so gesteuert wird, dass die Messzone entlang einer eigenen Trajektorie über die aktuelle Bearbeitungsfläche des Bauteils geführt wird.

7. Verfahren nach einem der Ansprüche 1 bis 6,
**dadurch gekennzeichnet, dass**
zur parallelen Durchführung verschiedener Messungen mehr als ein Eingangs-Strahl in die Bearbeitungsoptik eingekoppelt wird, wobei es sich bei den weiteren Eingangs-Strahlen insbesondere um Laserstrahlung zur Messung chemischer Größen mittels Laser-Emissionsspektroskopie und/oder um optische Strahlung zur Messung geometrischer Größen mittels absolut-messender Interferometrie handelt.

8. Verfahren nach einem der Ansprüche 1 bis 7,
**dadurch gekennzeichnet, dass**

das Ergebnis der Auswertung der erfassten Ausgangs-Strahlung zur Inline-Steuerung und/oder Regelung des Fertigungsprozesses verwendet wird.

9. Verfahren nach einem der Ansprüche 1 bis 8,
**dadurch gekennzeichnet, dass**
in Abhängigkeit vom Ergebnis der Auswertung der erfassten Ausgangs-Strahlung vor Hinzufügen der nächsten Schicht des Aufbaumaterials mindestens ein Korrekturschritt ausgeführt wird, in dem entweder der Bearbeitungsstrahl ein zweites Mal oder ein zweiter Bearbeitungsstrahl über die aktuelle Bearbeitungsfläche des Bauteils geführt wird.

10. Verfahren nach einem der Ansprüche 1 bis 9,
**dadurch gekennzeichnet, dass**
die Ultraschallanregung und die Messung des zugehörigen Schallechos zur Prüfung des verfestigten Aufbaumaterials zwischen den beiden Messzonen auf Defekte dienen.

11. Verfahren nach Anspruch 10,
**dadurch gekennzeichnet, dass**
die beiden Messzonen während der Ultraschallanregung und der Messung des zugehörigen Schallechos ortsfest bleiben, während die Bearbeitungszone sich weiter bewegt.

12. Vorrichtung zur generativen Fertigung von Bauteilen durch lokale Verfestigung einer Schicht eines Aufbaumaterials auf einer aktuellen Bearbeitungsfläche eines sich im Fertigungsprozess befindlichen Bauteils mittels einer Bearbeitung mit Strahlung, mit einer Bearbeitungsoptik (6,6',7) zum Fokussieren eines Bearbeitungsstrahls (1) auf eine Bearbeitungszone (8) in der Schicht des Aufbaumaterials, einer Bewegungseinrichtung (7) zum Ausführen einer Relativbewegung zwischen aus der Bearbeitungsoptik austretender Strahlung und der aktuellen Bearbeitungsfläche des Bauteils, so dass die Bearbeitungszone einer vorbestimmten Trajektorie (25) über die aktuelle Bearbeitungsfläche des Bauteils folgt, und ferner einer Einrichtung zum Einkoppeln des Bearbeitungsstrahls und mindestens eines zur Prozessüberwachung, insbesondere zur Erkennung von Defekten mittels Ultraschallmessung, dienenden Eingangs-Strahls (12,20) in die Bearbeitungsoptik, und einer Detektions- und Auswerteeinrichtung zur Erfassung und -Auswertung von von der Schicht des Aufbaumaterials ausgehender und unter Nutzung der Bearbeitungsoptik der Detektions- und Auswerteeinrichtung zugeführter Ausgangs-Strahlung vor Hinzufügen einer nächsten Schicht des Aufbaumaterials, wobei es sich bei dem mindestens einen Eingangs-Strahl (12) um zeitlich modulierte Laserstrahlung zur Erzeugung von Ultraschallwellen handelt, und

ein weiterer Eingangs-Strahl (20) zur laseroptischen Messung des Schallechos auf eine weitere Messzone fokussiert wird,
**dadurch gekennzeichnet, dass** im Strahlengang eines jeden Eingangs-Strahls eine diesem Strahl zugeordnete Ablenkeinheit (16,23) angeordnet ist, so dass der mindestens eine Eingangs-Strahl mittels der Bearbeitungsoptik auf eine Messzone fokussiert wird, die auf der aktuellen Bearbeitungsfläche des Bauteils in einem Umkreis der Bearbeitungszone relativ zur Bearbeitungszone frei positionierbar ist.

13. Vorrichtung nach Anspruch 12,
**dadurch gekennzeichnet, dass**
die Vorrichtung ferner eine Steuer- und Synchronisationseinrichtung zur Ansteuerung der dem mindestens einen Eingangs-Strahl zugeordneten Ablenkeinheit (16,23) und Synchronisation der Ablenkeinheit mit der Bewegungseinrichtung aufweist.

14. Vorrichtung nach Anspruch 12 oder 13,
**dadurch gekennzeichnet, dass**
die Bearbeitungsoptik mindestens ein strahlfokussierendes Element (6,6') und die als Ablenkeinheit (7,16,23), insbesondere als Galvanometer-Scanner, ausgebildete Bewegungseinrichtung umfasst.

15. Vorrichtung nach einem der Ansprüche 12 bis 14,
**dadurch gekennzeichnet, dass**
es sich bei der Ablenkeinheit (7,16,23) um einen 2D-Scanner, insbesondere einen Galvanometer-Scanner, handelt.

**Claims**

1. Method for additive manufacturing of components by locally solidifying a layer of a structural material on a current processing surface of a component undergoing the manufacturing process by means of processing with radiation, wherein a processing beam (1) is focused onto a processing zone (8) in the layer of the structural material by means of a processing optical unit (6, 6', 7), a movement device (7) is used to effect a relative movement between radiation emerging from the processing optical unit and the current processing surface of the component, such that the processing zone is guided along a predetermined trajectory over the current processing surface of the component, and furthermore at least one input beam (12, 20) serving for processing monitoring is coupled into the processing optical unit, and using the processing optical unit, before the next layer of the structural material is added, output radiation emanating from the layer of the structural material is fed to a detection and evaluation device and is detected and evaluated by the latter, wherein the at least one input beam (12) is temporally modulated laser radiation for generating ultrasound waves, and provision is made of a further input beam (20) for laser-optical measurement of the sound echo, **characterized in that** each input beam (12, 20) additionally passes a deflection unit (16, 23) assigned to it, such that it is focused onto a measurement zone (24) assigned to it by means of the processing optical unit, said measurement zone being freely positionable relative to the processing zone on the current processing surface of the component in a vicinity of the processing zone.

2. Method according to Claim 1,
   **characterized in that**
   the deflection unit assigned to the at least one input beam is synchronized with the movement device by means of a control and synchronization device.

3. Method according to Claim 2,
   **characterized in that**
   the deflection unit is controlled such that the measurement zone lags behind the processing zone on the predetermined trajectory (25, 26) in order to determine properties of the solidified structural material.

4. Method according to Claim 2 or 3,
   **characterized in that**
   the deflection unit is controlled such that the measurement zone moves coaxially with respect to the processing zone, in particular in order to determine properties of a melt pool produced by the processing beam.

5. Method according to any of Claims 2 to 4,
   **characterized in that**
   the deflection unit is controlled such that the measurement zone leads the processing zone on the predetermined trajectory, in particular in order to determine properties of the structural material prior to processing.

6. Method according to Claim 2,
   **characterized in that**
   the deflection unit is controlled such that the measurement zone is guided along a dedicated trajectory over the current processing surface of the component.

7. Method according to any of Claims 1 to 6,
   **characterized in that**
   in order to carry out different measurements in parallel, more than one input beam is coupled into the processing optical unit, wherein the further input beams are, in particular, laser radiation for measuring chemical variables by means of laser emission spectroscopy and/or optical radiation for measuring geometric variables by means of absolute measuring interferometry.

8. Method according to any of Claims 1 to 7,
   **characterized in that**
   the result of the evaluation of the detected output radiation is used for inline control and/or regulation of the manufacturing process.

9. Method according to any of Claims 1 to 8,
   **characterized in that**
   depending on the result of the evaluation of the detected output radiation, before the next layer of the structural material is added, at least one correction step is carried out, in which either the processing beam is guided a second time or a second processing beam is guided over the current processing surface of the component.

10. Method according to any of Claims 1 to 9,
    **characterized in that**
    the ultrasonic excitation and the measurement of the associated sound echo serve for testing the solidified structural material between the two measurement zones for defects.

11. Method according to Claim 10,
    **characterized in that**
    the two measurement zones remain stationary during the ultrasonic excitation and the measurement of the associated sound echo, while the processing zone continues to move.

12. Apparatus for additive manufacturing of components by locally solidifying a layer of a structural material on a current processing surface of a component undergoing the manufacturing process by means of processing with radiation, comprising a processing optical unit (6, 6', 7) for focusing the processing beam (1) onto a processing zone (8) in the layer of the structural material, a movement device (7) for effecting a relative movement between radiation emerging from the processing optical unit and the current processing surface of the component, such that the processing zone follows a predetermined trajectory (25) over the current processing surface of the component, and furthermore a device for coupling the processing beam and at least one input beam (12, 20) serving for process monitoring, in particular for identifying defects by means of ultrasonic measurement, into the processing optical unit, and a detection and evaluation device for detecting and evaluating output radiation that emanates from the layer of the structural material and is fed to the detection and evaluation device using the processing optical unit, before a next layer of the structural material is added, wherein the at least one input beam (12) is temporally modulated laser radiation for generating ultrasound waves, and a further input beam (20) for laser-optical measurement of the sound echo is focused onto a further measurement zone,

**characterized in that**

in the beam path of each input beam there is arranged a deflection unit (16, 23) assigned to said beam, such that the at least one input beam is focused onto a measurement zone by means of the processing optical unit, said measurement zone being freely positionable relative to the processing zone on the current processing surface of the component in a vicinity of the processing zone.

13. Apparatus according to Claim 12,

**characterized in that**

the apparatus furthermore comprises a control and synchronization device for guiding the deflection unit (16, 23) assigned to the at least one input beam and for synchronizing the deflection unit with the movement device.

14. Apparatus according to Claim 12 or 13,

**characterized in that**

the processing optical unit comprises at least one beam-focusing element (6, 6') and the movement device embodied as a deflection unit (7, 16, 23), in particular as a galvanometer scanner.

15. Apparatus according to any of Claims 12 to 14,

**characterized in that**

the deflection unit (7, 16, 23) is a 2D scanner, in particular a galvanometer scanner.

**Revendications**

1. Procédé de fabrication générative d'éléments structuraux par solidification locale d'une couche d'un matériau de construction sur une surface d'usinage actuelle d'un élément structural qui se trouve en processus de fabrication au moyen d'un usinage par rayonnement, avec lequel

un rayon d'usinage (1) est focalisé au moyen d'une optique d'usinage (6, 6', 7) sur une zone d'usinage (8) dans la couche du matériau de construction, un mouvement relatif est exécuté au moyen d'un dispositif de mouvement (7) entre le rayonnement émanant de l'optique d'usinage et la surface d'usinage actuelle de l'élément structural, de sorte que la zone d'usinage est guidée le long d'une trajectoire prédéterminée au-dessus de la surface d'usinage actuelle de l'élément structural,

et de plus au moins un rayon d'entrée (12, 20) servant à la surveillance du processus est injecté dans l'optique d'usinage, et

le rayonnement de sortie émanant de la couche de matériau de construction est acheminé à un dispositif de détection et d'interprétation en utilisant l'optique d'usinage avant l'ajout d'une couche suivante du matériau de construction, puis est acquis et interprété par celui-ci l'au moins un rayon d'entrée (12) étant un rayonnement laser modulé dans le temps destiné à générer des ondes ultrasoniques, et

un rayon d'entrée supplémentaire (20) destiné à la mesure optique par laser de l'écho sonore étant présent,

**caractérisé en ce que**

chaque rayon d'entrée (12, 20) passe en plus par une unité de déviation (16, 23) qui lui est associée, de sorte qu'il est focalisé au moyen de l'optique d'usinage sur une zone de mesure (24) qui lui est associée, laquelle est positionnable librement par rapport à la zone d'usinage sur la surface d'usinage actuelle de l'élément structural dans un périmètre de la zone d'usinage.

2. Procédé selon la revendication 1, **caractérisé en ce que** l'unité de déviation associée à l'au moins un rayon d'entrée est synchronisée avec le dispositif de mouvement au moyen d'un dispositif de commande et de synchronisation.

3. Procédé selon la revendication 2, **caractérisé en ce que** l'unité de déviation est commandée de telle sorte que la zone de mesure est en retard par rapport à la zone d'usinage sur la trajectoire (25, 26) prédéterminée en vue de déterminer des propriétés du matériau de construction solidifié.

4. Procédé selon la revendication 2 ou 3, **caractérisé en ce que** l'unité de déviation est commandée de telle sorte que la zone de mesure se déplace de manière coaxiale par rapport à la zone d'usinage, notamment en vue de déterminer des propriétés d'un bain de fusion généré par le rayon d'usinage.

5. Procédé selon l'une des revendications 2 à 4, **caractérisé en ce que** l'unité de déviation est commandée de telle sorte que la zone de mesure est en avance sur la zone d'usinage sur la trajectoire prédéterminée, notamment en vue de déterminer des propriétés du matériau de construction avant l'usinage.

6. Procédé selon la revendication 2, **caractérisé en ce que** l'unité de déviation est commandée de telle sorte que la zone de mesure est guidée le long d'une trajectoire propre sur la surface d'usinage actuelle de l'élément structural.

7. Procédé selon l'une des revendications 1 à 6, **caractérisé en ce que** plusieurs rayons d'entrée sont injectés dans l'optique d'usinage en vue de réaliser plusieurs mesures en parallèle, les plusieurs rayons d'entrée étant notamment un rayonnement laser destiné à mesurer des grandeurs chimiques au moyen de la spectroscopie d'émission laser et/ou un rayonnement optique destiné à mesurer des grandeurs géométriques au moyen de l'interférométrie de mesure absolue.

8. Procédé selon l'une des revendications 1 à 7, **caractérisé en ce que** le résultat de l'interprétation du rayonnement de sortie acquis est utilisé pour la commande en ligne et/ou pour la régulation en ligne du processus de fabrication.

9. Procédé selon l'une des revendications 1 à 8, **caractérisé en ce qu'**en fonction du résultat de l'interprétation du rayonnement de sortie acquis, au moins une étape de correction est exécutée avant d'ajouter la couche suivante du matériau de construction, dans laquelle soit le rayon d'usinage est guidé une deuxième fois, soit un deuxième rayon d'usinage est guidé sur la surface d'usinage actuelle de l'élément structural.

10. Procédé selon l'une des revendications 1 à 9, **caractérisé en ce que** l'excitation aux ultrasons et la mesure de l'écho sonore associé servent à contrôler le matériau de construction solidifié en vue de la présence d'éventuels défauts entre les deux zones de mesure.

11. Procédé selon la revendication 10, **caractérisé en ce que** les deux zones de mesure restent en position fixe pendant l'excitation aux ultrasons et la mesure de l'écho sonore associé, alors que la zone d'usinage continue de se déplacer.

12. Arrangement de fabrication générative d'éléments structuraux par solidification locale d'une couche d'un matériau de construction sur une surface d'usinage actuelle d'un élément structural qui se trouve en processus de fabrication au moyen d'un usinage par rayonnement, comprenant

une optique d'usinage (6, 6', 7) destinée à focaliser un rayon d'usinage (1) sur une zone d'usinage (8) dans la couche du matériau de construction, un dispositif de mouvement (7) destiné à exécuter un mouvement relatif entre le rayonnement émanant de l'optique d'usinage et la surface d'usinage actuelle de l'élément structural, de sorte que la zone d'usinage est guidée le long d'une trajectoire (25) prédéterminée au-dessus de la surface d'usinage actuelle de l'élément structural, et de plus un dispositif destiné à injecter dans l'optique d'usinage le rayon d'usinage et au moins un rayon d'entrée (12, 20) servant à la surveillance du processus, notamment destiné à reconnaître des défauts au moyen d'une mesure aux ultrasons, et un dispositif de détection et d'interprétation destiné à acquérir et à interpréter le rayonnement de sortie émanant de la couche du matériau de construction et acheminé au dispositif de détection et d'interprétation en utilisant l'optique d'usinage avant l'ajout d'une couche suivante du matériau de construction, l'au moins un rayon d'entrée (12) étant un rayonnement laser modulé dans le temps destiné à générer des ondes ultrasoniques, et
un rayon d'entrée supplémentaire (20) destiné à la mesure optique par laser de l'écho sonore étant focalisé sur une zone de mesure supplémentaire, **caractérisé en ce que**
une unité de déviation (16, 23) associée à chaque rayon d'entrée est disposée dans le trajet de rayon de ce rayon, de sorte que l'au moins un rayon d'entrée est focalisé au moyen de l'optique d'usinage sur une zone de mesure, laquelle est positionnable librement par rapport à la zone d'usinage sur la surface d'usinage actuelle de l'élément structural dans un périmètre de la zone d'usinage.

13. Arrangement selon la revendication 12, **caractérisé en ce que** l'arrangement possède en outre un dispositif de commande et de synchronisation destiné à commander l'unité de déviation (16, 23) associée à l'au moins un rayon d'entrée et à synchroniser l'unité de déviation avec le dispositif de mouvement.

14. Arrangement selon la revendication 12 ou 13, **caractérisé en ce que** l'optique d'usinage comporte au moins un élément de focalisation de rayon (6, 6') et le dispositif de mouvement, réalisé sous la forme de l'unité de déviation (7, 16, 23), notamment sous la forme d'un dispositif de balayage à galvanomètre.

15. Arrangement selon l'une des revendications 12 à 14, **caractérisé en ce que** l'unité de déviation (7, 16, 23) est un dispositif de balayage 2D, notamment un dispositif de balayage à galvanomètre.

Fig. 1

Fig. 2

Fig. 3

Fig. 4

Fig. 5

Fig. 6

**IN DER BESCHREIBUNG AUFGEFÜHRTE DOKUMENTE**

**In der Beschreibung aufgeführte Patentdokumente**

- EP 1815936 A1

**In der Beschreibung aufgeführte Nicht-Patentliteratur**

- **P. LOTT et al.** Design of an Optical system for the In Situ Process Monitoring of Selective Laser Melting (SLM). *Phys. Procedia,* 2011, vol. 12, 683-690